# EUROPEAN PATENT APPLICATION

(11) **EP 1 607 993 A1**
(43) Date of publication of application: **21.12.2005**
(21) Application number: 05253668.7
(22) Date of filing: 14.06.2005
(51) Int. Cl.: H01H 23/00, G08C 17/02, H02K 7/18

(54) **Electrical switches and wireless-operated systems including them**

(30) Priority: 14.06.2004 GB 0413316
(71) Applicant: Timeguard Limited, London NW2 6ND (GB)
(72) Inventor: Heftman, George, Hertfordshire CM23 2RY (GB)
(74) Representative: Coles, Graham Frederick

(57) **Abstract**

An electrical rocker switch has an over-centre mechanism (1) storing energy mechanically in one or other of two springs (10;11) according to the sense of switch-actuation, and the over-centre action releases the energy to spin the shaft (14) of a dynamo (15). The current generated is rectified to power a transmitter (16) for transmitting a wireless signal encoded with information indicative of polarity of the dynamo-generated current.

A wireless receiver (20) responds to the transmitted signal to open or close relay contacts (24) according to the encoded sense-information. Without the encoded-sense information the contacts are opened and closed alternately with successive signals received.

## Description

This invention relates to electrical switches and wireless-operated systems including them.

An electrical switch and wireless operated system including it, is known from GB-A-2336045 for use in the context of an existing electrical mains-powered lighting installation to provide an additional facility for switching a lamp on and off. In this regard, the switch supplements the function of existing wall-mounted switches, but unlike the existing switches requires no wire-connection to the mains and lamp. More particularly, actuation of the supplementary switch causes its wireless transmitter to emit a wireless signal that is received by a control unit connected in the mains circuit close to the lamp, to bring about the desired switching function.

It is an object of the present invention to provide an improved form of electrical switch and wireless-operated system including it.

According to one aspect of the present invention there is provided an electrical switch for use in a wireless-operated system, wherein a wireless transmitter of the switch is powered by electricity that is generated in response to release of energy stored mechanically from switch-actuation.

The electrical switch of GB-A-2336045 depends upon a battery to power the wireless transmitter, and this is of disadvantage in that provision has to be made for access to the interior of the switch for battery-changing. The need for a battery and such access limits the possibility for miniaturisation of the switch, but is also of particular disadvantage where the switch is to be wall-mounted and, for example, have the appearance of a conventional, wired switch. Although batteries today can last for up to ten years, it is preferable to install systems that do not require maintenance within the life of a typical lighting or power installation, which is usually considerably in excess of the longest battery-life span. The present invention enables this to be achieved.

The generation of electricity to power the wireless transmitter in the electrical switch of the invention may be achieved by applying the release of the stored energy to rotate the shaft of a dynamo device.

The energy may be stored in a spring, and switch-actuation for storing the energy may be by operation of a push-button or rocker mechanism that has an over-centre action, operation of the mechanism initially storing energy mechanically and then releasing it through the over-centre action. The mechanism may include two compression springs one of which is compressed to store energy mechanically during an initial stage of operation of the mechanism and then release it through the over-centre action, the particular one of the springs compressed to store energy being dependent on the sense of operation of the mechanism.

According to another aspect of the invention a wireless-operated system comprises an electrical switch for transmitting a wireless signal in accordance with actuation of the switch, and a wireless receiver for responding to the transmitted signal, wherein a wireless transmitter of the switch is powered for transmission of the signal by electricity that is generated in response to release of energy stored mechanically from switch-actuation.

The wireless receiver may be responsive to the transmitted signal to carry out a switching function in which contacts are opened and closed alternately with reception of successive transmissions of the wireless signal. However, where the electricity generated is of one or the other polarity in dependence upon the sense of actuation of the switch, the polarity may be detected and information concerning the detected polarity included in the signal transmitted. The wireless receiver may in these circumstances be responsive to the transmitted signal to carry out a switching function that is dependent on the detected polarity. In this regard the switching function may be the opening or closing of contacts according to which polarity is detected.

An electrical switch and a wireless-operated system including it, in accordance with the invention, will now be described, by way of example, with reference to the accompanying drawings, in which:
Figure 1 is a diagrammatic representation of the mechanism of the electrical switch;
Figure 2 is a block-schematic representation of the electrical circuit of the electrical switch; and
Figure 3 is a block-schematic representation of the receiver module for use in conjunction with the electrical switch of Figures 1 and 2, in the wireless-operated system of the invention.

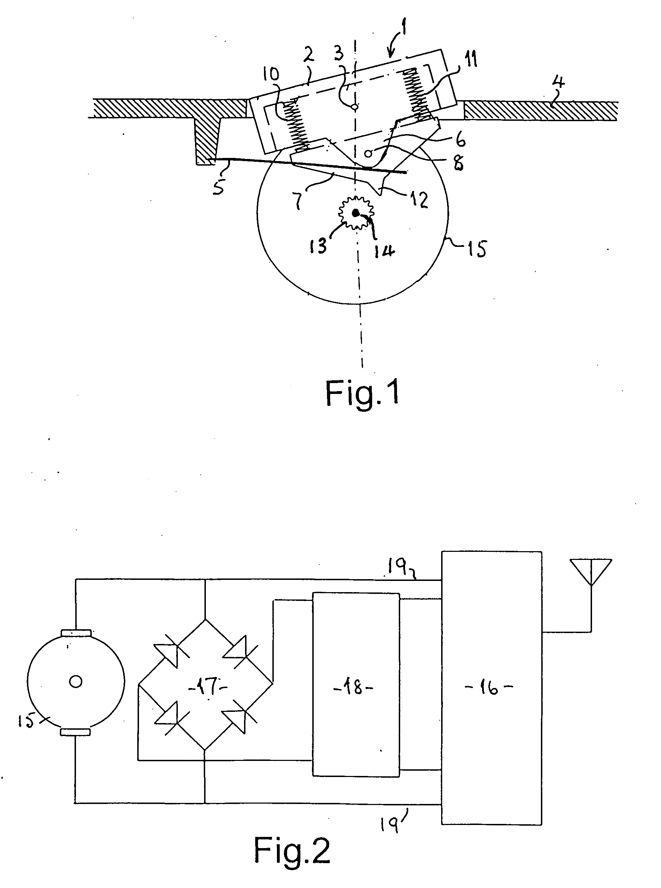

Referring to Figure 1, the electrical switch includes a bistable rocker mechanism 1 having an over-centre, toggle action between nominally OFF and ON states. The mechanism 1 has a dolly or rocker 2 that is mounted on a pivot 3 in a surface-mounting wall-plate 4 of the switch. A leaf-spring 5 mounted on the underside of the plate 4 bears on a cam-lobe 6 of the rocker 2 for biasing the rocker 2 to adopt one or the other of its extreme angular states.

An actuator member 7 is located beneath the rocker 2 on a pivot 8 in the lobe 6. Two identical compression springs 10 and 11 are compressed between the rocker 2 and member 7 either side of the pivots 3 and 8. The two springs 10 and 11 exert equal and opposite torques on the rocker 2 about the pivot 3 and on the member 7 about the pivot 8, so that the member 7 is maintained substantially parallel to the rocker 2 in both the OFF and ON states of the switch.

The member 7 has an apex-projection 12 which engages the teeth of a pinion 13 carried by the shaft 14 of a dynamo 15 whenever the rocker 2 is actuated by finger pressure to change the state of the switch from OFF to ON, or from ON to OFF. During a first stage of such a change, the angular displacement of the rocker 2 about its pivot 3 brings the projection 12 onto the pinion 13, and the consequent reactive force causes angular deflection of the member 7 about its pivot 8 relative to the rocker 2. This deflection is aided by one of the springs 10 and 11, and is resisted by compression of the other.

As angular displacement of the rocker 2 continues under finger pressure, force of the projection 12 on the pinion 13 and compression of the compressed spring 10 or 11 increase, and the pivot 8 is brought into alignment with the "centre line" C between the axis of the shaft 14 and the pivot 3. Further displacement of the rocker 2 then urges the pivot 8 through this alignment allowing the projection 12 to break free from its engagement with the pinion 13. The breaking free of this engagement is accompanied by release of the energy stored mechanically in the compressed spring 10 or 11, as force spinning the pinion 13. The spinning of the pinion 13 rotates the shaft 14 of the dynamo 15 so as to generate electrical current, and the rotation continues until the energy released on the pinion 13 is dissipated in overcoming friction and the electrical loading on the dynamo 15. The polarity with which the current is supplied is dependent on the direction in which the shaft 14 is rotated and therefore upon the sense with which the rocker 2 is moved between its OFF and ON states.

Referring to Figure 2, the output current of the dynamo 15 is used to power a wireless transmitter module 16 of the switch. The waveform of this current signal, which may last for approximately one second, is triangular in form and unsuitable to power the transmitter module 16 directly. Instead, the output of the dynamo 15 is supplied to a full-wave rectifier 17 to derive and supply direct current to power the transmitter module 16 via a voltage regulator 18. The polarity of the direct current is independent of the sense of movement of the rocker 2.

The circuit of the transmitter module 16 (which may be of the same kind as used for remote locking of motor cars) includes a facility for encoding the transmitted signal with identification of the switch. The transmitted signal also includes information that signifies the sense in which the rocker 2 of the switch has been moved, that is to say, whether the switch is operated from its OFF to its ON state or *vice versa.* To this end, the output current of the dynamo 15 is supplied directly to the module 16 via leads 19, and detection of its polarity there is used for appropriate encoding of sense-of-change in the transmitted wireless signal.

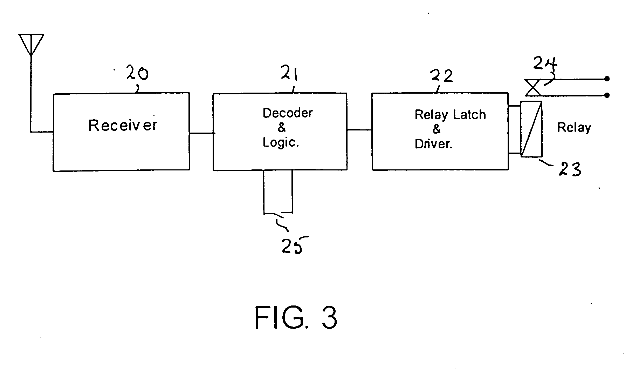

Figure 3 illustrates the form of a typical module for use in the switching system to respond to the wireless signal transmitted by the transmitter module 16.

Referring to Figure 3, the wireless signal transmitted from the module 16 of the switch is received and demodulated by a receiver 20 and passed to a decoder and logic circuit 21. The output of the circuit 21 drives a relay latch circuit 22 which controls the operational state of an output relay 23; the circuit 22 includes a memory function since a signal is transmitted from the switch only when its state is changed. The contacts 24 of the relay 23 are connected in series with a load (not shown), for example a mains- or battery-powered lighting circuit.

Where the encoding of the signal transmitted by the switch does not include information about the sense of change of its OFF-ON state, the relay 23 is operated to open and close the contacts 24 alternately with each successive signal received. However, where the sense-of-change information is included in the transmitted signal, the circuit 21 may be set to detect it, by closing contacts 25. With the contacts 25 closed, the circuit 21 operates the circuit 22 to close the contacts 24 when the switch is switched to the ON state and to open them when it is switched to its OFF state. This function may be used, for example, to resolve possible conflict when more than one transmitting switch is used with the same receiver module (for example, where a switch at each end of a room is used for common control of lighting to the room).

In the context of room-lighting, the receiver module may be small enough to fit into a small space behind a ceiling rose to control a lamp suspended from it. The lamp can then be controlled from anywhere within wireless-range of the switch.

The function of the dynamo 15 may be readily provided by utilising the generating capability of a small direct-current electric motor of the kind available commercially for use in portable appliances.

By way of modification of the mechanism of the switch described above with reference to Figure 1, the apex-projection 12 of the member 7 may be replaced by a plurality of gear teeth centred on the pivot 8, for engaging the teeth of the pinion 13. Furthermore, instead of using a rocker mechanism for switch actuation, a push-button mechanism having an over-centre action may be used.

## Claims

1. An electrical switch for use in a wireless-operated system, wherein a wireless transmitter of the switch is powered by electricity that is generated in response to release of energy stored mechanically from switch-actuation.

2. An electrical switch according to Claim 1 wherein release of the stored energy is applied to rotate the shaft of a dynamo device, and the transmitter is powered from current generated by that device.

3. An electrical switch according to Claim 1 or Claim 2 wherein the energy is stored in a spring.

4. An electrical switch according to any one of Claims 1 to 3 wherein switch-actuation is by operation of a mechanism that has an over-centre action, and wherein operation of this mechanism initially stores energy mechanically and then releases it through the over-centre action.

5. An electrical switch according to Claim 4 wherein the mechanism includes two compression springs one of which is compressed to store energy mechanically during an initial stage of operation of the mechanism and then release it through the over-centre action, the particular one of the springs compressed to store energy being dependent on the sense of operation of the mechanism.

6. An electrical switch according to any one of Claims 1 to 5 wherein the electricity generated is of one or the other polarity in dependence upon the sense of actuation of the switch.

7. An electrical switch according to Claim 6 including means for detecting the polarity of the electricity generated and the transmission by the transmitter includes information concerning the polarity detected.

8. A wireless-operated system, comprising an electrical switch for transmitting a wireless signal in accordance with actuation of the switch, and a wireless receiver for responding to the transmitted signal, wherein a wireless transmitter of the switch is powered for transmission of the signal by electricity that is generated in response to release of energy stored mechanically from switch-actuation.

9. A wireless-operated system according to Claim 8 wherein release of the stored energy is applied to rotate the shaft of a dynamo device, and the transmitter is powered from current generated by the dynamo device.

10. A wireless-operated system according to Claim 8 or Claim 9 wherein the energy is stored in a spring.

11. A wireless-operated system according to any one of Claims 8 to 10 wherein switch-actuation is by operation of a mechanism that has an over-centre action, and wherein operation of the mechanism initially stores energy mechanically and then releases it through the over-centre action.

12. A wireless-operated system according to Claim 11 wherein the mechanism includes two compression springs one of which is compressed to store energy mechanically during an initial stage of operation of the mechanism and then release it through the over-centre action, the particular one of the springs compressed to store energy being dependent on the sense of operation of the mechanism.

13. A wireless-operated system according to any one of Claims 8 to 12 wherein the wireless receiver is responsive to the transmitted signal to carry out a switching function in which contacts are opened and closed alternately with reception of successive transmissions of the wireless signal.

14. A wireless-operated system according to any one of Claims 8 to 12 wherein the electricity generated is of one or the other polarity in dependence upon the sense of actuation of the switch.

15. A wireless-operated system according to Claim 14 including means for detecting the polarity of the electricity generated and wherein a wireless signal transmitted by the transmitter includes information concerning the polarity detected.

16. A wireless-operated system according to Claim 15 wherein the wireless receiver is responsive to the transmitted signal to carry out a switching function in dependence upon the detected polarity.

17. A wireless-operated system according to Claim 16 wherein the switching function is the opening and closing of contacts, and the wireless receiver is responsive to the transmitted signal to open the contacts in response to detection of one polarity and to close them in response to the other.
